(19) Europäisches Patentamt
European Patent Office
Office européen des brevets

(11) **EP 3 068 985 B1**

## (12) EUROPÄISCHE PATENTSCHRIFT

(45) Veröffentlichungstag und Bekanntmachung des Hinweises auf die Patenterteilung:
**13.12.2017 Patentblatt 2017/50**

(21) Anmeldenummer: **14789178.2**

(22) Anmeldetag: **25.10.2014**

(51) Int Cl.:
*F01N 3/08* *(2006.01)*  *F01N 3/20* *(2006.01)*
*F01N 9/00* *(2006.01)*  *F01N 11/00* *(2006.01)*
*F01N 13/00* *(2010.01)*  *F02D 41/02* *(2006.01)*
*F02D 41/14* *(2006.01)*

(86) Internationale Anmeldenummer:
**PCT/EP2014/002885**

(87) Internationale Veröffentlichungsnummer:
**WO 2015/070950 (21.05.2015 Gazette 2015/20)**

(54) **VERFAHREN ZUM BETREIBEN EINES ABGASREINIGUNGSSYSTEMS EINER BRENNKRAFTMASCHINE**

METHOD FOR OPERATING AN EXHAUST GAS PURIFICATION SYSTEM OF AN INTERNAL COMBUSTION ENGINE

PROCÉDÉ POUR PILOTER UN SYSTÈME DE PURIFICATION DE GAZ D'ÉCHAPPEMENT D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2013 DE 102013019025**

(43) Veröffentlichungstag der Anmeldung:
**21.09.2016 Patentblatt 2016/38**

(73) Patentinhaber: **Daimler AG**
**70327 Stuttgart (DE)**

(72) Erfinder:
• **HOHNER, Peter**
**70619 Stuttgart (DE)**
• **ZELLER, Carsten**
**70806 Kornwestheim (DE)**

(74) Vertreter: **JENSEN & SON**
**366-368 Old Street**
**London EC1V 9LT (GB)**

(56) Entgegenhaltungen:
| | |
|---|---|
| EP-A2- 0 878 609 | DE-A1- 19 816 175 |
| DE-A1-102007 040 439 | DE-A1-102008 027 575 |
| DE-A1-102009 054 046 | US-A1- 2010 043 402 |

**Beschreibung**

Die Erfindung betrifft ein Verfahren zum Betreiben eines Abgasreinigungssystems einer Brennkraftmaschine, die in einem Magerbetriebsmodus mit Luftüberschuss und in einem Fettbetriebsmodus mit Luftmangel betrieben werden kann.

Aus der EP 0 878 609 A2 ist eine Brennkraftmaschine bekannt, die in einem Magerbetriebsmodus mit Luftüberschuss und in einem Fettbetriebsmodus mit Luftmangel betrieben werden kann. In einer Ausführungsform weist die Brennkraftmaschine ein Abgasreinigungssystem auf, in welchem in Abgasströmungsrichtung hintereinander ein Ammoniak-Bildungskatalysator, ein Ammoniak-SCR-Katalysator mit einer Speicherfähigkeit für Ammoniak ($NH_3$) und ein Stickoxid-Speicherkatalysator angeordnet sind. Der Stickoxid-Speicherkatalysator besitzt die Eigenschaft, unter mageren Betriebsbedingungen der Brennkraftmaschine im Abgas enthaltene Stickoxide ($NO_x$) einspeichern zu können. Unter fetten Betriebsbedingungen werden im NOx-Speicherkatalysator eingespeicherte $NO_x$ durch im Abgas enthaltene reduzierend wirkende Bestandteile reduziert und der NOx-Speicherkatalysator dadurch regeneriert. Weiterhin werden unter fetten Betriebsbedingungen im Abgas enthaltene $NO_x$ durch Reaktion mit den reduzierend wirkenden Abgasbestandteilen am NH3-Bildungskatalysator wenigstens teilweise zu $NH_3$ reduziert und derart gebildeter $NH_3$ im nachgeschalteten NH3-SCR-Katalysator eingespeichert. Wird die Brennkraftmaschine im Magerbetriebsmodus betrieben, so können im Abgas enthaltene NOx also sowohl durch Reduktion mit im NH3-SCR-Katalysator eingespeichertem $NH_3$ als auch durch Einspeicherung im NOx-Speicher-Katalysator aus dem Abgas entfernt werden. Auf diese Weise ist im Vergleich zu einem alleinigen Einsatz eines NOx-Speicherkatalysators die NOx-Verminderung verbessert.

Aus der DE 10 2009 054 046 A1 ist ein Verfahren zum Betreiben eines Abgasreinigungssystems zum Reinigen eines Abgases einer Brennkraftmaschine bekannt, die in einem Magerbetriebsmodus mit Luftüberschuss und in einem Fettbetriebsmodus mit Luftmangel betrieben werden kann. Das Abgasreinigungssystem weist in einer Strömungsrichtung des Abgases hintereinander angeordnet einen Ammoniak-Bildungskatalysator, der unter reduzierenden Bedingungen eine wenigstens teilweise Reduktion von im Abgas enthaltenen Stickoxid zu Ammoniak katalysieren kann, einen ersten Abgassensor, einen Ammoniak-SCR-Katalysator mit einer Speicherfähigkeit für Ammoniak, einen dem Ammoniak-SCR-Katalysator unmittelbar nachgeschalteten Stickoxid-Speicherkatalysator mit einer Speicherfähigkeit für Sauerstoff und einer Speicherfähigkeit für Stickoxide, und einen zweiten Abgassensor auf. Als Abgassensoren werden ein erster und zweiter Abgassensor eingesetzt, welche jeweils ein mit einem Stickoxid-Gehalt des Abgases korrelierendes erstes Signal und ein mit einem Lambda-Wert des Abgases korrelierendes zweites Signal abgeben können.

Die DE 10 2007 040 439 A1 offenbart ein Verfahren zur Diagnose eines Ammoniak-SCR-Katalysators dessen Ammoniak-Speicherfähigkeit zu ermitteln. Dabei werden Signale von NOx-Sensoren genutzt.

Die DE 198 16 175 A1 offenbart ein Verfahren zur Diagnose eines Stickoxid-Speicherkatalysators dessen Sauerstoff-Speicherfähigkeit zu ermitteln. Dabei werden Signale von Lambda-Sensoren genutzt.

Aufgabe der Erfindung ist es, ein Verfahren zum Betreiben eines Abgasreinigungssystems der oben genannten Art anzugeben, welches eine möglichst vollständige Entfernung von Schadstoffen aus den Brennkraftmaschinenabgasen ermöglicht.

Die Erfindung löst das Problem durch ein Verfahren mit den Merkmalen des Anspruchs 1.

Das erfindungsgemäße Verfahren findet bei einem Abgasreinigungssystem einer Brennkraftmaschine Anwendung, die in einem Magerbetriebsmodus mit Luftüberschuss und in einem Fettbetriebsmodus mit Luftmangel betrieben werden kann. Das Abgasreinigungssystem weist in einer Strömungsrichtung des Abgases hintereinander angeordnet einen NH3-Bildungskatalysator, der unter reduzierenden Bedingungen eine wenigstens teilweise Reduktion von im Abgas enthaltenen $NO_x$ zu $NH_3$ katalysieren kann, einen ersten Abgassensor, einen NH3-SCR-Katalysator mit einer Speicherfähigkeit für $NH_3$, einen dem NH3-SCR-Katalysator unmittelbar nachgeschalteten Stickoxid-Speicher-katalysator mit einer Speicherfähigkeit für Sauerstoff ($O_2$) und einer Speicherfähigkeit für $NO_x$, und einen zweiten Abgassensor auf. Als erster und zweiter Abgassensor werden Abgassensoren eingesetzt, welche jeweils ein mit einem NOx-Gehalt des Abgases korrelierendes erstes Signal und ein mit einem Lambda-Wert des Abgases korrelierendes zweites Signal abgeben können. Dabei ist unter einem Lambdawert wie üblich das Verhältnis von der Brennkraftmaschine zugeführter Luft und Kraftstoff (Motor-Lambdawert) in Bezug auf den stöchiometrischen Lambdawert von 1,0 bzw. das Oxidations- bzw. Reduktionspotential des dabei entstehenden Abgases (Abgas-Lambdawert) zu verstehen. In einem Diagnosebetrieb in sich unmittelbar aneinander anschließenden Betriebsphasen der Brennkraftmaschine mit Magerbetriebsmodus und mit Fettbetriebsmodus werden durch Auswertung der Signale des ersten und des zweiten Abgassensors die NH3-Speicherfähigkeit des NH3-SCR-Katalysators, die Sauerstoff-Speicherfähigkeit (OSC = Oxygen Storage Capacity) des NOx-Speicherkatalysators und optional die NOx-Speicherfähigkeit des NOx-Speicherkatalysators ermittelt. Die Einspeicherung von $O_2$, $NO_x$ bzw. $NH_3$ in den Katalysatoren ist dabei als reversible Einspeicherung zu verstehen. Das heißt, dass eingespeichertes(r) $O_2$, $NO_x$ bzw. $NH_3$ durch Reaktion mit entsprechenden Abgaskomponenten aus den Katalysatoren wieder entfernt werden kann. Typischerweise kann im NH3-SCR-Katalysator eingespeichertes $NH_3$ und im NOx-Speicherkatalysator eingespeichertes $NO_x$ jedoch auch anderweitig, beispielsweise thermisch desorbiert werden.

Von den Erfindern wurde erkannt, dass es zur Erzielung einer umfassenden, wirkungsvollen und gründlichen Abgasreinigung erforderlich ist, bei dem im Normalbetrieb durchgeführten abwechselnden Betrieb der Brennkraftmaschine mit Magerbetriebsmodus und Fettbetriebsmodus die Dauer der Betriebsphasen der Brennkraftmaschine mit Magerbetriebsmodus und Fettbetriebsmodus auf die Speichereigenschaften des NOx-Speicherkatalysator und des NH3-SCR-Katalysators abzustimmen. Bei ungenügender Abstimmung können unerwünschte Restemissionen von NOx, HC, CO und $NH_3$ auftreten. Von den Erfindern der vorliegenden Erfindung wurde insbesondere erkannt, dass eine mangelhafte Abstimmung der Fettbetriebsphase auf die NH3-Speicherfähigkeit des NH3-SCR-Katalysators eine unerwünschte Sekundäremission von klimaschädlichem Lachgas ($N_2O$) zur Folge haben kann. Wird nämlich aufgrund einer lang andauernden Fettbetriebsphase eine große NH3-Menge gebildet und im NH3-SCR-Katalysator eingespeichert, kann es zu einem Schlupf von $NH_3$ aus dem NH3-SCR-Katalysator kommen. In den NOx-Speicherkatalysator eingetragenes $NH_3$ kann dann jedoch im NOx-Speicherkatalysator zu $N_2O$ oxidiert werden. Aufgrund der erfindungsgemäßen Ermittlung der NH3-Speicherfähigkeit des NH3-SCR-Katalysators sowie der Ermittlung von OSC und gegebenenfalls NOx-Speicherfähigkeit des NOx-Speicherkatalysator ist eine optimale Anpassung der Dauern von Fettbetriebsphase und Magerbetriebsphase an die Speichereigenschaften des NH3-SCR-Katalysators und des NOx-Speicherkatalysators und damit eine weitest gehende Vermeidung der oben genannten Sekundäremissionen ermöglicht.

Es hat sich als besonders vorteilhaft erwiesen, zur Ermittlung der Speichereigenschaften des NH3-SCR-Katalysators und des NOx-Speicherkatalysator Abgassensoren zwischen dem NH3-Bildungskatalysator und dem NH3-SCR-Katalysator bzw. hinter dem NOx-Speicherkatalysator einzusetzen, welche jeweils zumindest ein mit einem NOx-Gehalt des Abgases korrelierendes erstes Signal und ein mit einem Lambda-Wert des Abgases korrelierendes zweites Signal abgeben können. Die Abgassensoren weisen von Abgas erreichbare Messzellen auf, in welchen die entsprechenden Signale erzeugt werden können. Bevorzugt werden integrierte Abgassensoren eingesetzt, welche sowohl ein mit dem NH3-Gehalt und/oder mit dem NOx-Gehalt des Abgases korrelierendes Signal und ferner ein mit dem Lambdawert des Abgases korrelierendes Signal abgeben können. Für den ersten und/oder den zweiten Abgassensor können jedoch auch für jede der Abgaskomponenten einzeln selektiv empfindliche Sensoren eingesetzt werden, was jedoch aufgrund des erhöhten apparativen Aufwands nicht bevorzugt ist. Mittels der Abgassensoren zwischen dem NH3-Bildungskatalysator und dem NH3-SCR-Katalysator sowie stromab des NOx-Speicherkatalysators wird die Dauer einer jeweiligen Phase im Magerbetriebsmodus und im Fettbetriebsmodus gesteuert. Hierzu werden die Ausgangssignale der Abgassensoren von einer elektronischen Steuereinheit ausgewertet.

Ein typischerweise von Zeit zu Zeit durchgeführter Diagnosebetrieb mit Ermittlung der Speichereigenschaften der Katalysatoren ist insbesondere deshalb vorteilhaft, weil die Speicherfähigkeitswerte der Katalysatoren einer alterungsbedingten Änderung unterliegen können. Sind die aktuellen Speicherfähigkeitswerte ermittelt, so können beim normalen Wechsel von Betriebsphasen im Magerbetriebsmodus und im Fettbetriebsmodus die Zeitdauern der jeweiligen Phasen im Sinne einer optimalen Abgasreinigung an sich gegebenenfalls geänderte Speicherfähigkeitskennwerte der Katalysatoren angepasst werden. Insbesondere zur Vermeidung einer Lachgasbildung am NOx-Speicherkatalysator ist es vorteilhaft, die aktuelle NH3-Speicherfähigkeit des NH3-SCR-Katalysators zu kennen und zu berücksichtigen, da Lachgas mittels des zweiten Abgassensors nicht oder zumindest nicht zuverlässig detektiert werden kann. Die Dauer des Brennkraftmaschinenbetriebs im Fettbetriebsmodus mit NH3-Bildung am NH3-Bildungskatalysator kann dann in Abhängigkeit vom Ausmaß der Ausschöpfung der aktuellen NH3-Speicherfähigkeit des NH3-SCR-Katalysators festgelegt werden.

Wie sich erwiesen hat, ist lediglich die OSC des NOx-Speicherkatalysators ein im Diagnosebetrieb direkt ermittelbarer Speicherfähigkeitskennwert für die serielle Kombination von unmittelbar hintereinander angeordnetem NH3-SCR-Katalysator und Stickoxid-Speicherkatalysator, wenn, wie vorliegend vorzugsweise vorgesehen, auf einen weiteren Abgassensor zwischen NH3-SCR-Katalysator und NOx-Speicherkatalysator verzichtet wird. Dies liegt darin begründet, dass der NOx-Speicherkatalysator eine OSC aufweist, der NH3-SCR-Katalysator hingegen nicht. Demgegenüber sind die NH3-Speicherfähigkeit des NH3-SCR-Katalysators und die NOx-Speicherfähigkeit des NOx-Speicherkatalysators bei einer solchen Ausführung des Abgasreinigungssystems nicht direkt einzeln ermittelbar. Dies liegt wiederum darin begründet, dass im Allgemeinen nicht unterschieden werden kann, ob $NO_x$ durch Reduktion mit im NH3-SCR-Katalysator gespeichertem $NH_3$ oder durch Einspeicherung im NOx-Speichermaterial des NOx-Speicherkatalysators dem Abgas entzogen wurde. Für die OSC und die NOx-Speicherfähigkeit des NOx-Speicherkatalysators ist ebenfalls ein Summenwert ermittelbar.

Es ist gemäß der Erfindung vorgesehen, dass im Diagnosebetrieb ein erster Speicherfähigkeitssummenwert für die OSC und die NOx-Speicherfähigkeit des NOx-Speicherkatalysators und ein zweiter Speicherfähigkeitssummenwert für die NOx-Speicherfähigkeit des NOx-Speicherkatalysators und die NH3-Speicherfähigkeit des NH3-SCR-Katalysators ermittelt werden und durch Verrechnung der ermittelten OSC und des ersten und des zweiten Speicherfähigkeitssummenwerts die NH3-Speicherfähigkeit des NH3-SCR-Katalysators ermittelt wird.

OSC und NOx-Speicherfähigkeit geben an, wie viele Mole oder welche Masse $O_2$ bzw. NO in dem jeweiligen Speichermaterial des NOx-Speicherkatalysators unter den jeweiligen Bedingungen eingespeichert werden können. Da ein halbes Mol $O_2$ und ein Mol NO zur Oxidation von einem Mol CO oder $H_2$ erforderlich ist, können OSC und der erste Speicherfähigkeitssummenwert beispielsweise jeweils in CO- oder H2-Äquivalenten skaliert sein. Der erste Speicherfähigkeitssummenwert wird in diesem Fall durch die Summe der CO- oder H2-Äquivalente der OSC und der NOx-Speicherfähigkeit des NOx-Speicherkatalysators angegeben. NH3- und NOx-Speicherfähigkeit sowie der zweite Speicherfähigkeitssummenwert können beispielsweise jeweils in $N_2$-Äquivalenten angegeben sein.

In Ausgestaltung der Erfindung ist vorgesehen, dass zur Ermittlung der NOx-Speicherfähigkeit des NOx-Speicherkatalysators im Diagnosebetrieb ein erster Speicherfähigkeitssummenwert für die OSC und die NOx-Speicherfähigkeit des NOx-Speicherkatalysators ermittelt wird und durch Verrechnung der ermittelten OSC mit dem ersten Speicherfähigkeitssummenwert die NOx-Speicherfähigkeit des NOx-Speicherkatalysator ermittelt wird.

Zur direkten Ermittlung der OSC des NOx-Speicherkatalysators wird in weiterer Ausgestaltung der Erfindung im Diagnosebetrieb die Brennkraftmaschine in einem ersten Verfahrensschritt solange im Fettbetriebsmodus betrieben, bis die NH3-Speicherfähigkeit des NH3-SCR-Katalysators durch Aufnahme von im Fettbetriebsmodus am NH3-Bildungskatalysator gebildetem und mit dem Abgas in den NH3-SCR-Katalysator eingetragenem $NH_3$ zumindest weitestgehend ausgeschöpft ist und der NOx-Speicher-katalysator zumindest weitestgehend von (reversibel) eingespeichertem $NO_x$ und $O_2$ befreit ist und in einem direkt anschließenden zweiten Verfahrensschritt ein Wechsel des Brennkraftmaschinenbetriebs in den Magerbetriebsmodus vorgenommen, und aus einem Zeitverzug zwischen dem einen Wechsel von fett nach mager anzeigenden zweiten Signal des ersten Abgassensors und dem einen Wechsel von fett nach mager anzeigenden zweiten Signal des zweiten Abgassensors die OSC des NOx-Speicherkatalysators ermittelt.

Zur Ermittlung des zweiten Speicherfähigkeitssummenwerts wird in weiterer Ausgestaltung der Erfindung im Diagnosebetrieb die Brennkraftmaschine in einem ersten Verfahrensschritt solange im Fettbetriebsmodus betrieben, bis die NH3-Speicherfähigkeit des NH3-SCR-Katalysators durch Aufnahme von im Fettbetriebsmodus am NH3-Bildungsungskatalysator gebildetem und mit dem Abgas in den NH3-SCR-Katalysator eingetragenem $NH_3$ zumindest weitestgehend ausgeschöpft ist und der NOx-Speicher-katalysator zumindest weitestgehend von (reversibel) eingespeichertem $NO_x$ und $O_2$ befreit ist und in einem direkt anschließenden zweiten Verfahrensschritt ein Wechsel des Brennkraftmaschinenbetriebs in den Magerbetriebsmodus vorgenommen, und in einem dritten Verfahrensschritt die Brennkraftmaschine solange im Magerbetriebsmodus betrieben, bis die NOx-Speicherfähigkeit des NOx-Speicherkatalysators durch Einspeicherung von mit dem Abgas in den NOx-Speicherkatalysator eingetragenem $NO_x$ zumindest weitestgehend ausgeschöpft ist. Aus den über die Zeitdauer des dritten Verfahrensschritts integrierten ersten Signalen des ersten und des zweiten Abgassensors wird sodann der zweite Speicherfähigkeitssummenwert ermittelt.

Zur Ermittlung des ersten Speicherfähigkeitssummenwerts wird in weiterer Ausgestaltung der Erfindung ausgehend von einem Magerbetrieb der Brennkraftmaschine mit zumindest annähernd ausgeschöpfter NOx-Speicherfähigkeit des NOx-Speicherkatalysators ein Wechsel des Brennkraftmaschinenbetriebs in den Fettbetriebsmodus vorgenommen und der Fettbetriebsmodus solange aufrechterhalten, bis das zweite Signal des zweiten Abgassensors einen Wechsel von mager nach fett anzeigt. Der erste Speicherfähigkeitssummenwert wird sodann wenigstens aus einem Zeitverzug zwischen dem einen Wechsel von mager nach fett anzeigenden zweiten Signal des ersten Abgassensors und dem einen Wechsel von mager nach fett anzeigenden zweiten Signal des zweiten Abgassensors ermittelt.

In weiterer Ausgestaltung des Verfahrens wird zur Ermittlung des ersten Speicherfähigkeitssummenwerts zusätzlich eine in Verbindung mit dem Wechsel des Brennkraftmaschinenbetriebs vom Magerbetriebsmodus in den Fettbetriebsmodus erfolgende Freisetzung von unreduziert aus dem NOx-Speicherkatalysator desorbierendem NOx durch summarische Erfassung des ersten Signals des zweiten Abgassensors berücksichtigt. Insbesondere wenn die NOx-Speicherfähigkeit des NOx-Speicherkatalysators beispielsweise durch einen lang andauernden Betrieb der Brennkraftmaschine mit Magerbetriebsmodus relativ stark ausgeschöpft ist, kann es bei einem Wechsel in den Fettbetriebsmodus zu einer Desorption von gespeichertem $NO_x$ kommen, wobei die desorbierenden Stickoxide unreduziert und somit ohne Verbrauch von Reduktionsmittel aus dem NOx-Speicherkatalysator ausgetragen werden. Der Reduktionsmittelverbrauch zur Regeneration des NOx-Speicherkatalysators ist somit vermindert, weshalb die Zeitdauer, bis das zweite Signal des zweiten Abgassensors einen Wechsel von mager nach fett anzeigt, verringert ist. Die Ermittlung der NOx-Speicherfähigkeit des NOx-Speicherkatalysators allein auf der Basis der Zeitdauer bis zu diesem Sensorsignalwechsel ist in einem solchen Fall somit fehlerbehaftet. Durch integrale Erfassung des unreduziert desorbierenden $NO_x$ mittels des ersten Signals des zweiten Abgassensors kann dieser Fehler jedoch korrigiert werden. Die Genauigkeit der ermittelten NOx-Speicherfähigkeit des NOx-Speicherkatalysators bzw. des zweiten Speicherfähigkeitssummenwerts ist daher verbessert.

Es ist erfindungsgemäß vorgesehen, dass die Brennkraftmaschine außerhalb des Diagnosebetriebs in einem Wechsel von sich abwechselnden Betriebsphasen im Magerbetriebsmodus und Fettbetriebsmodus betrieben wird, wobei eine jeweilige Betriebsphase im Fettbetriebsmodus spätestens dann beendet wird, wenn die im NH3-SCR-Katalysator gespeicherte NH3-Menge einen vorgebbaren Schwellenwert erreicht hat, der kleiner als die NH3-Speicherfähigkeit des NH3-SCR-Katalysators ist. Auf diese Weise wird vermieden, dass im Fettbetriebsmodus NH3-Schlupf am NH3-SCR-Katalysator auftritt, welcher eine unerwünschte Bildung von Lachgas infolge einer Reduktion des zum nachgeschalteten NOx-Speicherkatalysator gelangenden $NH_3$ verursachen würde. Wird ermittelt, dass die Menge von im NH3-SCR-Katalysator eingespeichertem $NH_3$ den Schwellenwert erreicht hat, so ist es vorzugsweise vorgesehen, die Regeneration des NOx-Speicherkatalysator durch Wechsel in den Magerbetrieb auch dann abzubrechen, wenn dieser noch einge-

speicherte NO$_x$ aufweist und somit noch nicht vollständig regeneriert ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination, sondern auch in anderen Kombinationen oder in der Alleinstellung verwendbar, ohne den Rahmen der Erfindung zu verlassen.

Dabei zeigen:

Fig. 1    ein schematisches Blockbild eines Abgasreinigungssystems gemäß der Erfindung,

Fig. 2    ein erstes Zeitdiagramm mit schematisch dargestellten Lambdaverläufen von Abgassensoren des Abgasreinigungssystems gemäß Fig. 1 bei einem Wechsel von einem Fettbetrieb in einen Magerbetrieb,

Fig. 3    ein zweites Zeitdiagramm mit schematisch dargestellten Signalverläufen von Abgassensoren des Abgasreinigungssystems gemäß Fig. 1 bei einem Wechsel von einem Fettbetrieb in einen Magerbetrieb,

Fig. 4    und ein drittes Zeitdiagramm mit schematisch dargestellten Lambdaverläufen von Abgassensoren des Abgasreinigungssystems gemäß Fig. 1 bei einem Wechsel von einem Fettbetrieb in einen Magerbetrieb.

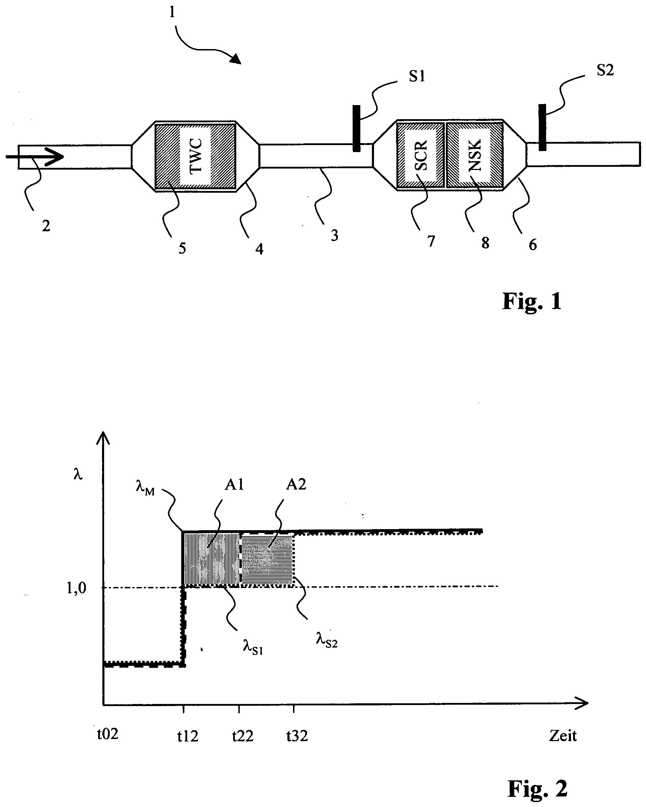

Fig. 1 zeigt lediglich grob schematisch ein Abgasreinigungssystem 1 einer nicht dargestellten Brennkraftmaschine eines Kraftfahrzeugs. Die Brennkraftmaschine ist sowohl in einem Magerbetriebsmodus mit Luftüberschuss als auch in einem Fettbetriebsmodus mit Luftmangel betreibbar. Vorliegend ist die Brennkraftmaschine als fremdgezündeter, direkteinspritzender Ottomotor ausgebildet. Eine Ausführung als kompressionsgezündeter Dieselmotor ist jedoch ebenfalls möglich. Abgas der Brennkraftmaschine strömt entsprechend einer durch einen Pfeil 2 gekennzeichneten Strömungsrichtung in eine Abgasleitung 3. In der Abgasleitung 3 sind in der Abgasströmungsrichtung hintereinander ein NH3-Bildungskatalysator 5, ein erster Abgassensor S1, ein NH3-SCR-Katalysator 7, ein NOx-Speicherkatalysator 8 und ein zweiter Abgassensor S2 angeordnet.

Der NH3-Bildungskatalysator 5 ist in einem separaten Gehäuse 4 angeordnet und vermag unter reduzierenden Bedingungen, also bei einem Lambdawert mit $\lambda < 1$ für das in ihn einströmende Abgas, NH$_3$ zu bilden, indem er wenigstens eine Teilmenge von im Abgas enthaltenem NO$_x$ zu NH$_3$ reduziert. Ein Großteil des nicht zu NH$_3$ reduzierten NO$_x$ wird zu Stickstoff (N$_2$) reduziert. Der NH3-Bildungskatalysator 5 ist vorliegend als Drei-Wege-Katalysator (TWC) in Wabenkörperbauform mit einer Speicherfähigkeit für Sauerstoff (O$_2$) ausgebildet und weist eine dementsprechende Beschichtung, enthaltend insbesondere Ceroxid auf. Die Beschichtung weist zudem fein dispergiert Edelmetalle der Platingruppe auf, welche hauptsächlich die katalytische Wirkung des NH3-Bildungskatalysators 5 bewirken. Der NH3-Bildungskatalysator 5 kann zur Erhöhung der NH3-Ausbeute eine diesbezüglich optimierte Beschichtung aufweisen.

Der NH3-SCR-Katalysator 7 ist vorzugsweise ebenfalls als beschichteter Wabenkörper ausgebildet. Das Katalysator-Beschichtungsmaterial kann unter oxidierenden Bedingungen, d.h. bei einem Lambdawert mit $\lambda > 1$ für das in ihn einströmende Abgas eine selektive, kontinuierliche Reduktion von NO$_x$ mittels eingespeichertem und/oder zugeführtem NH$_3$ als selektivem NOx-Reduktionsmittel katalysieren. Als Reduktionsprodukt entsteht dabei überwiegend N$_2$. Bevorzugt als Katalysatormaterial ist ein Eisen oder Kupfer enthaltender Zeolith. Der Wabenkörper als Träger des Katalysator-Beschichtungsmaterials weist vorzugsweise durchgehend offene Strömungskanäle auf. Der Wabenkörper kann jedoch auch als Partikelfilter mit eintrittsseitig offenen und endseitig verschlossenen Eingangskanälen und mit eintrittseitig verschlossenen, endseitig offenen, zu den Eingangskanälen benachbarten Ausgangskanälen ausgebildet sein. Die Kanalwände sind dabei porös und dienen zur Ausfilterung von im Abgas enthaltenen Partikeln. In einem solchen Fall kann das Katalysator-Beschichtungsmaterial auf der Rohgasseite, d.h. auf den Kanalwänden der Eingangskanäle und/oder auf der Reingasseite, d.h. auf den Kanalwänden der Ausgangskanäle aufgebracht sein. Der NH3-SCR-Katalysator 7 kann jedoch auch als unbeschichteter, sogenannter Vollkatalysator in Wabenkörperbauform ausgebildet sein. In jedem Fall weist der NH3-SCR-Katalysator 7 eine, abhängig von seiner Temperatur, mehr oder weniger stark ausgebildete Fähigkeit zur Einspeicherung von NH$_3$ auf.

Der NOx-Speicherkatalysator 8 ist vorliegend ebenfalls als beschichteter Wabenkörper ausgebildet. Die Beschichtung verfügt über die Fähigkeit, unter oxidierenden Bedingungen mit dem Abgas in den NOx-Speicherkatalysator einströmende NO$_x$ einzuspeichern und damit aus dem Abgas zu entfernen. Hierfür weist die Beschichtung typischerweise basische Materialien der Alkali- bzw. Erdalkaligruppe wie beispielsweise Barium und außerdem fein dispergiert Edelmetalle der Platingruppe auf. Zudem weist der NOx-Speicherkatalysator 8 bzw. dessen Beschichtung im Gegensatz zum NH3-SCR-Katalysator eine Sauerstoffspeicherfähigkeit auf. Mit zunehmender Ausschöpfung der NOx-Speicherfähigkeit vermindert sich die Fähigkeit zur Einspeicherung von NO$_x$. Eine Regeneration kann jedoch dadurch erfolgen, dass dem NOx-Speicherkatalysator 8 zeitweise ein reduzierend wirkendes Abgas, d.h. ein Abgas mit einem Lambdawert mit λ < 1 zugeführt wird. Hierzu wird die Brennkraftmaschine im Fettbetriebsmodus betrieben. Dabei werden eingespeicherte NO$_x$ wieder freigesetzt und mit im Abgas enthaltenen reduzierend wirkenden Bestandteilen zum größten Teil zu N$_2$ umgesetzt.

Der NH3-SCR-Katalysator 7 und der NOx-Speicherkatalysator 8 sind vorliegend unmittelbar aufeinander folgend in einem gemeinsamen Gehäuse 6 angeordnet. Unmittelbar aufeinander folgend bedeutet dabei, dass sich zwischen den Katalysatoren 7, 8 keine andere reinigungsaktive Komponente und auch kein Abgassensor befindet. Typischerweise sind die Katalysatoren 7, 8 durch einen kleinen Spalt im Millimeter- oder Zentimeterbereich voneinander getrennt. NH3-SCR-Katalysator 7 und NOx-Speicherkatalysator 8 können jedoch auch durch aneinander grenzende Beschichtungen auf einem gemeinsamen Träger gebildet sein.

Im Abgasreinigungssystem 1 sind stromab des NH3-Bildungskatalysators 5 und eingangsseitig des NH3-SCR-Katalysators 7 ein erster Abgassensor S1 sowie ausgangsseitig des NOx-Speicherkatalysators 8 ein zweiter Abgassensor S2 angeordnet. Charakteristischerweise werden als Abgassensoren S1, S2 NOx-Sensoren eingesetzt. Dabei handelt es sich vorliegend um NOx-Sensoren, welche sowohl ein mit der NOx-Konzentration im Abgas korrelierendes Signal, als auch ein Lambdasignal bereitstellen. Bei dem Lambdasignal kann es sich um ein binäres und/oder ein lineares bzw. stetiges Lambdasignal handeln. Die Abgassensoren S1 und S2 können von gleicher Bauart sein. Es ist jedoch auch möglich, als ersten Abgassensor S 1 einen Abgassensor mit einem stetigen Lambdasignal, und als zweiten Abgassensor S2 einen Abgassensor mit einer Sprungcharakteristik bezüglich des Lambdasignals oder umgekehrt einzusetzen. Bevorzugt sind die Abgassensoren S1, S2 nach einem Zwei-Kammer-Messprinzip aufgebaut. Somit stehen bei Realisierung der Abgassensoren S1, S2 durch jeweils einen einzelnen dementsprechenden NOx-Sensor für jeden Abgassensor S1, S2 wenigstens zwei Ausgangssignale zur Verfügung, welche parallel ausgewertet werden können. Hierfür sind die Abgassensoren S1, S2 an eine nicht dargestellte Auswerte- und Steuereinheit angeschlossen.

Typischerweise wird durch im Abgas enthaltenen NH$_3$ ebenfalls ein Ausgangssignal erzeugt, welches zumindest annähernd einem Signal entspricht, welches durch eine gleich große Konzentration von NO$_x$ im Abgas erzeugt wird. Im Allgemeinen sind im Abgas jedoch NH$_3$ und NO$_x$ nicht gleichzeitig vorhanden, weshalb die vorliegend eingesetzten Abgassensoren S1, S2 neben dem mit dem Lambdawert des Abgases korrelierenden Signal ein weiteres Signal abgeben, welches entweder mit der NOx-Konzentration oder mit der NH3-Konzentration im Abgas korreliert. Nachfolgend wird das mit der NOx-Konzentration oder mit der NH3-Konzentration im Abgas korrelierende Signal des ersten und des zweiten Abgassensors als erstes Signal und das mit dem Lambdawert des Abgases korrelierende Signal der Abgassensoren S1, S2 als zweites Signal bezeichnet.

Im Normalbetrieb wird die Brennkraftmaschine abwechselnd im Magerbetriebsmodus mit Luftüberschuss und im Fettbetriebsmodus mit Luftmangel betrieben. Während des Magerbetriebsmodus werden im Abgas etwaig enthaltene reduzierende Bestandteile wie CO und HC durch Oxidation im NH3-Bildungskatalysator 5 oxidiert und somit aus dem Abgas entfernt. Im Abgas enthaltene NO$_x$ können jedoch durch den NH3-Bildungskatalysator 5 nicht entfernt werden. Sie gelangen in den NH3-SCR-Katalysator 7, in welchem sie mit zuvor eingespeichertem NH$_3$ selektiv reduziert werden, sofern der NH3-SCR-Katalysator 7 eingespeicherten NH$_3$ aufweist. Auf die Einspeicherung von NH$_3$ in den NH3-SCR-Katalysator 7 wird weiter unten näher eingegangen. Weist der NH3-SCR-Katalysator 7 keinen eingespeicherten NH$_3$ auf, beispielsweise weil der Vorrat an eingespeichertem NH$_3$ aufgebraucht ist, so gelangen im Abgas enthaltene NOx weiter in den NOx-Speicherkatalysator 8, wo sie durch Absorption bzw. Einspeicherung aus dem Abgas entfernt werden. Auf diese Weise kann die Brennkraftmaschine verhältnismäßig lange, d.h. bis zu einigen Minuten im verbrauchssparenden Magerbetriebsmodus betrieben werden ohne dass Schadstoffe in nennenswertem Umfang an die Umwelt abgegeben werden.

Im Magerbetriebsmodus werden jedoch nicht nur in den NOx-Speicherkatalysator 8 eingetragene NOx eingespeichert, sondern auch ein, wenngleich geringer, Anteil von im Abgas enthaltenem Sauerstoff (O$_2$). Die Speicherfähigkeit (OSC) für O$_2$ ist jedoch wie die Speicherfähigkeit für NO$_x$ begrenzt. Ist die NOx-Speicherkapazität des NOx-Speicherkatalysators 8 zu einem gewissen Grad ausgeschöpft, so können im Abgas enthaltene NO$_x$ nicht mehr vollständig absorbiert werden und es tritt ein mehr oder weniger ausgeprägter NOx-Schlupf auf. Wird dies durch Auswertung des ersten Signals des zweiten Abgassensors S2 festgestellt, so wird die Brennkraftmaschine typischerweise in den Fettbetriebsmodus umgeschalten. Im Fettbetriebsmodus kann ein Motor-Lambdawert durch Veränderung der Verbrennungsluftmenge und/oder der Kraftstoffzufuhrmenge von etwa 0,75 bis 0,95 eingestellt werden.

Im Fettbetriebsmodus werden im Abgas enthaltene NO$_x$ im NH3-Bildungskatalysator 5 durch Reduktion mit im Abgas enthaltenen reduzierenden Bestandteilen zu N$_2$, jedoch auch in erheblichem Umfang zu NH$_3$ reduziert. Auf diese Weise gebildeter NH$_3$ wird mit dem Abgas in den NH3-SCR-Katalysator 7 eingetragen und dort absorbiert bzw. eingespeichert und somit aus dem Abgas entfernt. Im Abgas weiterhin enthaltene reduzierende Bestandteile gelangen in den NOx-Speicherkatalysator 8 und reduzieren dort die eingespeicherten NOx. Dadurch wird die NOx-Aufnahmefähigkeit des NOx-Speicherkatalysators 8 wiederhergestellt, der NOx-Speicherkatalysator 8 somit regeneriert. Gleichzeitig wird der Sauerstoffspeicher des NOx-Speicherkatalysators 8 durch Reaktion des gespeicherten O$_2$ mit den reduzierenden Abgasbestandteilen entleert. Die Vollständigkeit der Regeneration des NOx-Speicherkatalysators 8 kann durch Erfassung und Auswertung des zweiten Signals des zweiten Abgassensors S2 festgestellt werden. Sinkt der vom zweiten Abgassensor S2 erfasste Abgas-Lambdawert auf einen Wert kleiner Eins ab, so gelangen reduzierende Abgasbestandteile durch den NOx-Speicherkatalysator 8 hindurch. Eingespeicherter $O_2$ und eingespeicherte $NO_x$ sind dann wenigstens annähernd vollständig aus dem NOx-Speicherkatalysator 8 entfernt. Die Regeneration wird in diesem Fall als vollständig oder zumindest als ausreichend angesehen und der Betrieb der Brennkraftmaschine spätestens zu diesem Zeitpunkt wieder in den Magerbetriebsmodus umgestellt.

Die NH3-Speicherfähigkeit des NH3-SCR-Katalysators 7 ist ebenfalls begrenzt und nimmt zudem mit zunehmender Temperatur ab. Insbesondere bei erhöhten Abgastemperaturen kann daher der Fall eintreten, dass die während des Fettbetriebs der Brennkraftmaschine in den NH3-SCR-Katalysator 7 eingetragene NH3-Menge nahe an dessen Aufnahmekapazität kommt oder diese übersteigt. Dies kann zu einem NH3-Schlupf führen, wobei durchbrechender $NH_3$ in den NOx-Speicherkatalysator 8 gelangt. Insbesondere wenn die Regeneration des NOx-Speicherkatalysators 8 noch nicht abgeschlossen ist, kann in den NOx-Speicherkatalysator 8 eintretender $NH_3$ dort zu Lachgas ($N_2O$) oxidiert werden und sodann in die Umwelt gelangen. Dies ist aufgrund der Klimaschädlichkeit von Lachgas unerwünscht. Eine Lachgasbildung kann auch eintreten, wenn im Magerbetriebsmodus bei einer hohen NH3-Speichermenge im NH3-SCR-Katalysator 7 $NH_3$ aufgrund eines raschen Temperaturanstiegs thermisch desorbiert und in den NOx-Speicherkatalysator 8 eingetragen wird. Es ist daher vorliegend vorgesehen, die im NH3-Bildungskatalysator 5 gebildete NH3-Menge bzw. die Dauer des Fettbetriebsmodus an die Speicherkapazität des NH3-SCR-Katalysators 7 anzupassen. Hierzu wird der Fettbetriebsmodus abgebrochen, wenn festgestellt wird, dass die im NH3-Bildungskatalysator 5 gebildete NH3-Menge einen Wert erreicht hat, welcher um ein vorgebbares Maß geringer als die NH3-Speicherfähigkeit des NH3-SCR-Katalysators 7 ist. Der Zeitpunkt des Wechsels vom Fettbetriebsmodus in den Magerbetriebsmodus wird vorliegend von der Auswerte- und Steuereinheit festgelegt. Hierfür werden bevorzugt abgespeicherte Kennlinien ausgewertet, welche die NH3-Bildung am NH3-Bildungskatalysator 5 und die NH3-Speicherfähigkeit des NH3-SCR-Katalysators 7 in Abhängigkeit von jeweiligen Betriebsbedingungen angeben. Ein Wechsel in den Magerbetriebsmodus wird vorzugsweise vorgenommen, wenn die gebildete NH3-Menge einen vorgebbaren Schwellenwert erreicht hat, der kleiner als die NH3-Speicherfähigkeit des NH3-SCR-Katalysators 7 ist oder wenn mittels des zweiten Abgassensors S2 ein Reduktionsmitteldurchbruch festgestellt wird, je nachdem welches Ereignis früher eintritt.

Da die NH3-Speicherfähigkeit des NH3-SCR-Katalysators 7 einem alterungsbedingten Nachlassen unterliegen kann, ist es vorliegend vorgesehen, die NH3-Speicherfähigkeit des NH3-SCR-Katalysators 7 von Zeit zu Zeit, beispielsweise nach Ablauf einer jeweiligen vorgegebenen oder vorgebbaren Fahrtstrecke des Kraftfahrzeugs, zu ermitteln. Zu diesem Zweck wird, vorzugsweise bei Vorliegen von annähernd konstanten und vorgegebenen oder vorgebbaren Betriebsbedingungen, in einen nachfolgend näher beschriebenen Diagnosebetrieb gewechselt.

Im Diagnosebetrieb werden in sich unmittelbar aneinander anschließenden Betriebsphasen der Brennkraftmaschine mit Magerbetriebsmodus und mit Fettbetriebsmodus durch Auswertung der Signale des ersten und des zweiten Abgassensors die NH3-Speicherfähigkeit des NH3-SCR-Katalysators 7, die Sauerstoff-Speicherfähigkeit des NOx-Speicherkatalysators 8 und optional die NOx-Speicherfähigkeit des NOx-Speicherkatalysators 8 ermittelt. Die Vorgehensweise wird dabei nachfolgend unter Bezug auf in den Figuren 2 bis 4 schematisch dargestellten Zeitverläufen von Signalen des ersten Abgassensors S1 und des zweiten Abgassensors S2 erläutert. Dabei sind die Zeitverläufe insofern zeitkorrigiert, als eine Abgaslaufzeit des vom Abgasauslass der Brennkraftmaschine bis zum Einbauort des ersten Abgassensors S1 strömenden Abgases und eine Abgaslaufzeit vom ersten Abgassensor S1 zum Einbauort des zweiten Abgassensors S2 unberücksichtigt bleibt.

Der Diagnosebetrieb wird vorliegend mit einem Betrieb der Brennkraftmaschine im Fettbetriebsmodus begonnen. Der Fettbetriebsmodus wird dabei solange aufrechterhalten, bis die NH3-Speicherfähigkeit des NH3-SCR-Katalysators 7 durch Aufnahme von im Fettbetriebsmodus am NH3-Bildungskatalysator 5 gebildetem und mit dem Abgas in den NH3-SCR-Katalysator 7 eingetragenem $NH_3$ zumindest weitestgehend ausgeschöpft ist und der NOx-Speicherkatalysator 8 zumindest weitestgehend von eingespeichertem $NO_x$ und $O_2$ befreit ist. Dies wird als gegeben angesehen, wenn das erste Signal des zweiten Abgassensors S2 wenigstens annähernd dem ersten Signal des ersten Abgassensors S1 entspricht und zudem das zweite Signal des zweiten Abgassensors S2 einen Abgaslambdawert von weniger als Eins, d.h. eine reduzierende Abgaszusammensetzung anzeigt. In diesem Fall ist der NH3-SCR-Katalysator 7 wenigstens annähernd gesättigt in Bezug auf eingespeicherten $NH_3$. Mit dem Abgas in den NH3-SCR-Katalysator 7 eintretender $NH_3$ kann nicht mehr durch Einspeicherung aus dem Abgas entfernt werden und der NH3-Gehalt des Abgases ist stromab des NH3-SCR-Katalysators 7 und auch stromab des NOx-Speicherkatalysators 8 zumindest annähernd so groß wie eintrittseitig des NH3-SCR-Katalysators 7. Weiterhin ist aufgrund des reduzierenden Abgaslambdawerts stromab des NOx-Speicherkatalysators 8 sichergestellt, dass der Sauerstoffspeicher des NOx-Speicherkatalysators 8 geleert und eingespeicherte $NO_x$ entfernt sind. Die Abgaslambdawerte vor dem NH3-SCR-Katalysator 7 und hinter dem NOx-Speicherkatalysator 8, d.h. die zweiten Signale des ersten und des zweiten Abgassensors sind somit ebenfalls annähernd gleich und entsprechen dem mit $\lambda_M$ gekennzeichneten Motor-Lambdawert. Dieser Zustand ist im Zeitdiagramm von Fig. 2 durch die aufeinanderliegenden Linien für den Motor-Lambdawert $\lambda_M$ (durchgezogene Line), für das zweite Signal $\lambda_{S1}$ des ersten Abgassensors S1 (gestrichelt) und das zweite Signal $\lambda_{S2}$ des zweiten Abgassensors S2 (gepunktet) im Zeitbereich von t02 bis t12 gekennzeichnet.

Nach Erreichen eines stabilen Zustands wird zum Zeitpunkt t12 der Betrieb der Brennkraftmaschine, vorzugsweise sehr rasch, in den Magerbetriebsmodus umgeschaltet. Dies ist durch den senkrechten Anstieg der durchgezogenen Kurve $\lambda_M$ gekennzeichnet. Mageres, einen Sauerstoffüberschuss enthaltendes Abgas wird somit ab t12 dem NH3-Bildungskatalysator 5 zugeführt. Dabei wird zunächst der in der vorangegangenen Fettbetriebsphase entleerte Sauerstoffspeicher des NH3-Bildungskatalysators 5 wieder aufgefüllt. Aus diesem Grund schlägt die magere Abgaszusammensetzung nicht sofort bis zum ersten Abgassensor S1 durch, und dessen zweites Signal $\lambda_{S1}$ verharrt zunächst auf einem Lambdawert von 1,0. Da somit dem NH3-SCR-Katalysator 7 und dem NOx-Speicherkatalysator 8 ein Abgas mit einem Abgaslambdawert von 1,0 zugeführt wird, zeigt auch das zweite Signal $\lambda_{S2}$ des zweiten Abgassensors S1 diesen Wert an. Ist zum Zeitpunkt t22 der Sauerstoffspeicher des NH3-Bildungskatalysators 5 gefüllt, so springt das zweite Signal $\lambda_{S1}$ des ersten Abgassensors S1 auf den Motor-Lambdawert $\lambda_M$. In den NH3-SCR-Katalysator 7 einströmendes, nunmehr mageres Abgas erreicht in Bezug auf den Lambdawert unverändert den NOx-Speicherkatalysator 8. Solange im Abgas enthaltener Sauerstoff in den NOx-Speicherkatalysator 8 eingespeichert wird und dessen Sauerstoffspeicherfähigkeit nicht erschöpft ist, verharrt das zweite Signal $\lambda_{S2}$ des zweiten Abgassensors S2 weiterhin auf einem Abgaslambdawert von 1,0. Erst wenn auch der Sauerstoffspeicher des NOx-Speicherkatalysators 8 zum Zeitpunkt t32 aufgefüllt ist, springt das zweite Signal $\lambda_{S2}$ des zweiten Abgassensors S2 ebenfalls auf den Motor-Lambdawert $\lambda_M$ Die im Zeitbereich zwischen t22 und t32 mit dem Abgas in den NOx-Speicherkatalysator 8 eingetragene Sauerstoffmenge wurde somit zum Auffüllen des Sauerstoffspeichers des NOx-Speicherkatalysators 8 verbraucht. Da die Sauerstoffkonzentration des Abgases sowie der Abgasmassenstrom aufgrund der in der Auswerte- und Steuereinheit vorhandenen bzw. ermittelten Daten jedoch vorliegen bzw. ermittelt werden können, ist zusammen mit diesen Werten und der gemessenen Zeitverzögerung t32-t22 zwischen dem Sprung des zweiten Signals $\lambda_{S1}$ des ersten Abgassensors S1 und dem des zweiten Signals des zweiten Abgassensors S2 auf den Motor-Lambdawert $\lambda_M$ die Sauerstoffspeicherfähigkeit (OSC) des NOx-Speicherkatalysators 8 ermittelbar.

Die Sauerstoffspeicherfähigkeit des NOx-Speicherkatalysators 8 korreliert damit auch mit der in Fig. 2 waagrecht gestrichelten Fläche A2. Diese kann ebenfalls erfasst und zur Ermittlung der Sauerstoffspeicherfähigkeit des NOx-Speicherkatalysators 8 herangezogen werden. Analog kann die in Fig. 2 senkrecht gestrichelt dargestellte Fläche A1 zur Ermittlung der Sauerstoffspeicherfähigkeit des NH3-Bildungskatalysators 5 herangezogen werden. Auf diese Weise kann auch der NH3-Bildungskatalysators 5 in Bezug auf eine alterungsbedingte Veränderung seiner Sauerstoffspeicherfähigkeit diagnostiziert werden.

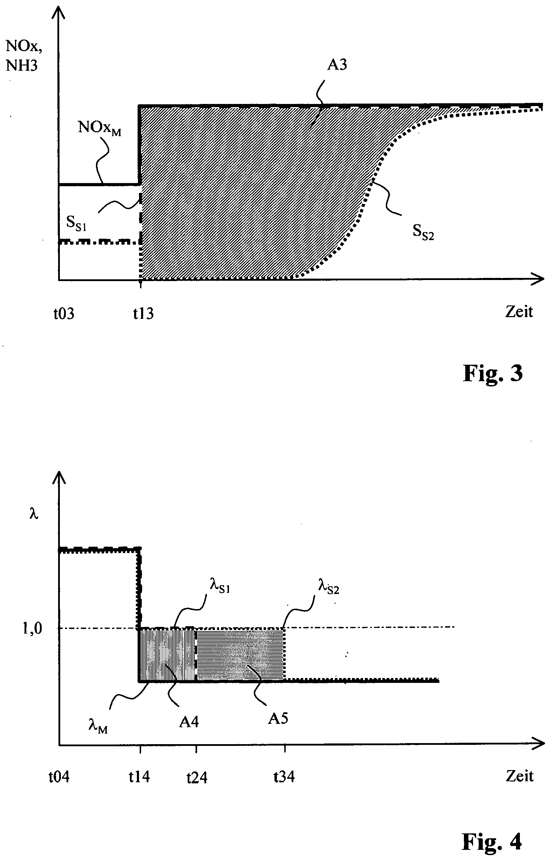

Ausgehend von einem Fettbetriebsmodus der Brennkraftmaschine, der solange aufrechterhalten wird, bis die NH3-Speicherfähigkeit des NH3-SCR-Katalysators 7 durch Aufnahme von im Fettbetriebsmodus am NH3-Bildungskatalysator 5 gebildetem und mit dem Abgas in den NH3-SCR-Katalysator 7 eingetragenem $NH_3$ zumindest weitestgehend ausgeschöpft ist und der NOx-Speicherkatalysator 8 zumindest weitestgehend von eingespeichertem $NO_x$ und $O_2$ befreit ist, kann nach einem Wechsel in den Magerbetriebsmodus auch ein Summenwert für die NOx-Speicherfähigkeit des NOx-Speicherkatalysators 8 und die NH3-Speicherfähigket des NH3-SCR-Katalysators 7 ermittelt werden. Dies wird nachfolgend unter Bezug auf das Zeitdiagramm von Fig. 3 näher erläutert.

Im Zeitdiagramm von Fig. 3 sind schematisch Zeitverläufe der laufzeitkorrigierten ersten Signale des ersten Abgassensors S1 und des zweiten Abgassensors S2 zusammen mit der NOx-Rohemission der Brennkraftmaschine schematisch dargestellt. Dabei ist die NOx-Rohemission der Brennkraftmaschine durch eine mit $NOx_M$ bezeichnete, durchgezogene Linie dargestellt. Das erste Signal des ersten Abgassensors S1 ist durch eine mit $S_{S1}$ bezeichnete gestrichelte Line und das erste Signal des zweiten Abgassensors S2 durch eine gepunktete, mit $S_{S2}$ bezeichnete Linie dargestellt.

Da im Fettbetriebsmodus von der Brennkraftmaschine emittierte NOx am NH3-Bildungskatalysator 5 nicht vollständig zu $NH_3$ reduziert werden, liegt das erste Signal $S_{S1}$ des ersten Abgassensors S1 unterhalb der NOx-Rohemission $NOx_M$ der Brennkraftmaschine und ist in diesem Fall als korrelierend mit der NH3-Konzentration des Abgases zu interpretieren. Infolge der Sättigung des NH3-SCR-Katalysators 7 an eingespeichertem $NH_3$ dringt im Abgas enthaltener $NH_3$ durch den NH3-SCR-Katalysator 7 und den von $NO_x$ und $O_2$ entleerten NOx-Speicherkatalysator 8 unverändert hindurch. Daher entspricht das erste Signal $S_{S2}$ des zweiten Abgassensors S2 zunächst dem des ersten Abgassensors S1. Wird bei zeitstabilen Verhältnissen zum Zeitpunkt t13 auf den Magerbetriebsmodus umgeschalten, so springt die NOx-Rohemission $NOx_M$ der Brennkraftmaschine typischerweise auf einen höheren Wert. Im Abgas enthaltene NOx erreichen unreduziert den ersten Abgassensor S1, weshalb auch das erste Signal $S_{S1}$ des ersten Abgassensors S1 auf diesen, nunmehr als NOx zu interpretierenden Signalwert ansteigt. Im Abgas enthaltene $NO_x$ erreichen im Wesentlichen in unveränderter Menge den NH3-SCR-Katalysator 7, wo sie zunächst durch Reaktion mit eingespeichertem $NH_3$ zumindest weitestgehend zu $N_2$ reduziert werden. In den NOx-Speicherkatalysator 8 gelangt somit zunächst ein an $NO_x$ freies Abgas. Das erste Signal $S_{S2}$ des zweiten Abgassensors S2 sinkt daher zum Zeitpunkt t13 auf zumindest annähernd Null ab. Auch wenn der im NH3-SCR-Katalysator 7 eingespeicherte NH3-Vorrat durch Reaktion mit einströmendem $NO_x$ aufgebraucht ist, verharrt das erste Signal $S_{S2}$ des zweiten Abgassensors S2 zunächst weiterhin auf Null, da in den NOx-Speicherkatalysator 8 einströmende NOx dort eingespeichert werden und den zweiten Abgassensor S2 nicht erreichen. Erst mit allmählicher Erschöpfung der NOx-Speicherfähigkeit des NOx-Speicherkatalysators 8 erreichen dann ausgangsseitig des NOx-Speicherkatalysators 8 im Abgas enthaltene $NO_x$ den zweiten Abgassensor S2. Das erste Signal $S_{S2}$ des zweiten Abgassensors S2 steigt daher erst nach geraumer Zeit an. Erst wenn im NH3-Speicherkatalysator 7 eingespeicherter NH3 aufgebraucht und zudem die NOx-Speicherfähigkeit des NOx-Speicherkatalysators 8 ausgeschöpft ist, erreicht das erste Signal $S_{S2}$ des zweiten Abgassensors S2 einen Wert, der dem des ersten Abgassensors S1 und damit der NOx-Rohemission $NOx_M$ der Brennkraftmaschine entspricht. Die in Fig. 3 gestrichelt dargestellte Fläche A3 stellt daher ein Maß für die gesamte, nach dem bei t13 durchgeführten Wechsel in den Magerbetriebsmodus aus dem Abgas durch Reaktion oder Einspeicherung entfernte NOx-Menge dar. Durch summarische Erfassung des ersten Signals $S_{S2}$ des zweiten Abgassensors S2 ab dem Zeitpunkt t13 bis zu einem Zeitpunkt einer vorgebbaren geringen Abweichung zur NOx-Rohemission $NOx_M$ der Brennkraftmaschine und Verrechnung mit der aus abgespeicherten Kennfeldern bekannten, in dieser Zeit von der Brennkraftmaschine emittierten NOx-Menge, bzw. einem für diesen Zeitraum ermittelten Integralwerts des ersten Signals $S_{S1}$ des ersten Abgassensors S1, kann daher ein Summenwert für die NH3-Speicherfähigkeit des NH3-SCR-Katalysators 7 und der NOx-Speicherfähigkeit des NOx-Speicherkatalysators 8 ermittelt werden.

Unter Bezug auf Fig. 4 wird nachfolgend die in einem weiteren Verfahrensschritt des Diagnosebetriebs vorgenommene Ermittlung eines Speicherfähigkeitssummenwerts für die Sauerstoff-Speicherfähigkeit und die NOx -Speicherfähigkeit des NOx-Speicherkatalysators 8 näher erläutert. Dabei sind in Fig. 4 analog zu Fig. 2 Zeitverläufe des Motor-Lambdawerts $\lambda_M$ (durchgezogene Linie) sowie des zweiten Signals $\lambda_{S1}$ (gestrichelt) des ersten Abgassensors S1 und des zweiten Signals $\lambda_{S2}$ (gepunktet) des zweiten Abgassensors S2 schematisch dargestellt.

Zur Ermittlung des Speicherfähigkeitssummenwerts für die Sauerstoff-Speicherfähigkeit und die NOx -Speicherfähigkeit des NOx-Speicherkatalysators 8 wird von einem Zustand im Magerbetriebsmodus der Brennkraftmaschine ausgegangen, bei welchem der NH3-SCR-Katalysator 7 wenigstens annähernd vollständig frei von eingespeichertem $NH_3$ vorliegt und die NOx-Speicherfähigkeit des NOx-Speicherkatalysators 8 wenigstens annähernd vollständig ausgeschöpft ist, d.h. der NOx-Speicherkatalysator 8 wenigstens annähernd gesättigt in Bezug auf eingespeicherte $NO_x$ vorliegt. Aufgrund des hierfür erforderlichen entsprechend lange andauernden Magerbetriebs sind auch die Sauerstoffspeicher des NH3-Bildungskatalysators 5 und des NOx-Speicherkatalysators 8 gefüllt. In diesem Zustand entsprechen die von den Abgassensoren S1, S2 abgegebenen zweiten Signale $\lambda_{S1}$, $\lambda_{S2}$ dem Motor-Lambdawert $\lambda_M$, weshalb die entsprechenden Linien in Fig. 4 ausgehend vom Zeitpunkt t04 aufeinanderliegen.

Bei Vorliegen von zeitstabilen Verhältnissen wird zum Zeitpunkt t14, vorzugsweise rasch, die Brennkraftmaschine auf Fettbetriebsmodus umgeschalten und der Motor-Lambdawert $\lambda_M$ sinkt daher auf den eingestellten Wert kleiner 1,0 ab. Das zweite Signal $\lambda_{S1}$ des ersten Abgassensors S1 sinkt demgegenüber lediglich auf einen Wert von 1,0 ab, da in den NH3-Bildungskatalysator 5 einströmende reduzierend wirkende Abgasbestandteile mit eingespeichertem $O_2$ reagieren und aus dem Abgas entfernt werden. Aus diesem Grund ist aus dem NH3-Bildungskatalysator 5 ausströmendes und den ersten Abgassensor S1 erreichendes Abgas zunächst wenigstens annähernd frei von reduzierenden Bestandteilen und weist auch keinen Sauerstoffüberschuss auf. Das chemisch nahezu inerte Abgas erreicht wenigstens annähernd unverändert den zweiten Abgassensor S2, weshalb dessen zweites Signal $\lambda_{S2}$ bei Vernachlässigung der Abgaslaufzeit ebenfalls zum Zeitpunkt t14 auf einen Wert absinkt, der einem Abgaslambda von 1,0 entspricht.

Dieser Zustand bleibt bis zur erfolgten Entleerung des Sauerstoffspeichers des NH3-Bildungskatalysators 5 zum Zeitpunkt t24 erhalten. Ist zum Zeitpunkt t24 der Sauerstoffspeicher des NH3-Bildungskatalysators 5 geleert, so werden von diesem reduzierende Bestandteile nicht länger aus dem Abgas entfernt und das von der Brennkraftmaschine abgegebene reduzierende Abgas erreicht in Bezug auf den Lambdawert nahezu unverändert den ersten Abgassensor S1 und den NH3-SCR-Katalysator 7. Das vom ersten Abgassensor S1 abgegebene zweite Signal $\lambda_{S1}$ springt daher zum Zeitpunkt t24 auf den Motor-Lambdawert $\lambda_M$. Mit Entleerung des Sauerstoffspeichers des NH3-Bildungskatalysators 5 beginnt dieser $NH_3$ durch katalytisch unterstützte Reduktion von im Abgas enthaltenen $NO_x$ zu bilden. Dies beeinflusst jedoch den Abgaslambdawert nicht oder lediglich unwesentlich. Im Abgas enthaltener $NH_3$ wird somit mit Einströmen in den NH3-SCR-Katalysator 7 aus dem Abgas entfernt und in den NOx-Speicherkatalysator 8 einströmendes reduzierendes Abgas weist einen Abgaslambdawert auf, der wenigstens annähernd dem Motor-Lambdawert $\lambda_M$ entspricht. In den NOx-Speicherkatalysator 8 ab dem Zeitpunkt t24 eintretende reduzierend wirkende Abgasbestandteile reagieren mit dort eingespeichertem $NO_x$ und $O_2$. Solange im NOx-Speicherkatalysator 8 eingespeicherte $NO_x$ und $O_2$ zur Verfügung stehen, verharrt das vom zweiten Abgassensor S2 abgegebene zweite Signal $\lambda_{S2}$ auf einem Lambdawert von 1,0. Erst mit Entleerung der entsprechenden Speicher werden reduzierende Abgasbestandteile vom NOx-Speicherkatalysator 8 nicht mehr aus dem Abgas entfernt und erreichen den zweiten Abgassensor S2. Dies ist vorliegend zum Zeitpunkt t34 der Fall, weshalb zu diesem Zeitpunkt das zweite Signal $\lambda_{S2}$ des zweiten Abgassensors S2 auf den Motor-Lambdawert $\lambda_M$ absinkt.

Aus dem oben geschilderten Sachverhalt folgt, dass im Zeitbereich zwischen t24 und t34 im von der Brennkraftmaschine abgegebenen Abgas enthaltene reduzierende Bestandteile durch Reaktion mit NOx-Speicherkatalysator 8 eingespeichertem $NO_x$ und $O_2$ aus dem Abgas entfernt werden. Daher korreliert die Zeitspanne t34-t24 mit der Summe der entsprechenden Speicherwerte. Die in der Zeitspanne t34-t24 vom Motor abgegebene Menge an reduzierenden Bestandteilen ist über der Steuer- und Auswerteeinheit zur Verfügung stehenden und/oder von ihr ermittelten Motorbetriebsdaten wie Ansaugluftmenge, Kraftstoffverbrauchsmenge, Abgasmassenstrom und gegebenenfalls weiteren Größen ermittelbar und direkt in einen Wert für die im NOx-Speicherkatalysator 8 eingespeicherten $NO_x$- und $O_2$-Mengen umrechenbar. Diese entsprechen aufgrund des vor der Umschaltung des Motorbetriebs in den Fettbetriebsmodus vorliegenden Sättigungszustands des NOx-Speicherkatalysators 8 dessen Speicherfähigkeitssummenwert für die Sauerstoffspeicherfähigkeit und die NOx-Speicherfähigkeit. Daher ist aus dem Zeitverzug zwischen dem einen Wechsel von mager nach fett anzeigenden zweiten Signal $\lambda_{S1}$ des ersten Abgassensors S1 und dem einen Wechsel von mager nach fett anzeigenden zweiten Signal $\lambda_{S2}$ des zweiten Abgassensors S2 der Speicherfähigkeitssummenwert für die Summe der Sauerstoff-Speicherfähigkeit und der NOx-Speicherfähigkeit des Stickoxid-Speicherkatalysators 8 ermittelbar. Wie aus den obigen Erläuterungen und Fig. 4 hervorgeht, ist dieser Speicherfähigkeitssummenwert auch aus der in Fig. 4 durch waagrechte Strichelung gekennzeichneten Fläche A5 ermittelbar. Analog kann die Sauerstoffspeicherfähigkeit des NH3-Bildungskatalysators 5 auch aus der durch senkrechte Strichelung gekennzeichneten Fläche A4 ermittelt werden. Durch Vergleich mit der weiter oben in Verbindung mit einem Wechsel vom Fettbetriebsmodus in den Magerbetriebsmodus ebenfalls ermittelbaren Sauerstoffspeicherfähigkeit des NH3-Bildungskatalysators 5 kann daher ein für diesen Speicherkennwert ein zuverlässigerer Schätzwert, beispielsweise durch Mittelung beider Ergebnisse gewonnen werden.

Bei dem im Diagnosebetrieb vorgenommenen Wechsel vom Magerbetriebsmodus in den Fettbetriebsmodus kann es zu einer Desorption von in dem NOx-Speicherkatalysator (8) eingespeicherten $NO_x$ derart kommen, dass desorbierende $NO_x$ unreduziert aus dem NOx-Speicherkatalysator 8 ausgetragen werden. In einem solchen Fall wird durch alleinige Auswertung des Zeitverzugs zwischen dem einen Wechsel von mager nach fett anzeigenden zweiten Signal $\lambda_{S1}$ des ersten Abgassensors S1 und dem einen Wechsel von mager nach fett anzeigenden zweiten Signal $\lambda_{S2}$ des zweiten Abgassensors S2 ein zu niedriger Speicherfähigkeitssummenwert für die Summe der Sauerstoff-Speicherfähigkeit und der NOx-Speicherfähigkeit des Stickoxid-Speicherkatalysators 8 ermittelt. Es ist daher vorliegend vorgesehen, durch eine Integration des ersten Signals $S_{S2}$ des zweiten Abgassensors S2 ab dem Zeitpunkt t14 bis etwa zum Zeitpunkt t34 die Menge der unreduziert aus dem NOx-Speicherkatalysator 8 desorbierenden $NO_x$ summarisch zu erfassen. Der dabei ermittelte Summenwert wird dem durch Auswertung des Zeitverzugs zwischen dem einen Wechsel von mager nach fett anzeigenden zweiten Signal $\lambda_{S1}$ des ersten Abgassensors S1 und dem einen Wechsel von mager nach fett anzeigenden zweiten Signal $\lambda_{S2}$ des zweiten Abgassensors S2 ermittelten Speicherfähigkeitssummenwert zugeschlagen. Dadurch kann dessen fehlerhafte Ermittlung vermieden werden.

Wie vorstehend erläutert, ist mit dem erfindungsgemäßen Diagnosebetrieb für das Abgasreinigungssystem gemäß Fig. 1 einerseits die Sauerstoffspeicherfähigkeit (OSC) des NOx-Speicherkatalysators 8 ermittelbar. Andererseits sind sowohl ein Speicherfähigkeitssummenwert für die NOx-Speicherfähigkeit des NOx-Speicherkatalysators 8 und die NH3-Speicherfähiget des NH3-SCR-Katalysators 7, als auch ein Speicherfähigkeitssummenwert für die Summe der Sauerstoff-Speicherfähigkeit und der NOx-Speicherfähigkeit des Stickoxid-Speicherkatalysators 8 ermittelbar. Werden die Sauerstoffspeicherfähigkeit des NOx-Speicherkatalysators 8 mit $OSC_{NSC}$, der Speicherfähigkeitssummenwert für die NOx-Speicherfähigkeit des NOx-Speicherkatalysators 8 und die NH3-Speicherfähiget des NH3-SCR-Katalysators 7 mit $\Sigma(S_{NOx} + S_{NH3})$ und der Speicherfähigkeitssummenwert für die Summe der Sauerstoff-Speicherfähigkeit und der NOx-Speicherfähigkeit des Stickoxid-Speicherkatalysators 8 mit $\Sigma(OSC_{NSC} + S_{NOx})$ bezeichnet, so ergibt sich die NH3-Speicherfähigkeit $S_{NH3}$ durch folgende Beziehung:

$$S_{NH3} = OSC_{NSC} - \Sigma(OSC_{NSC} + S_{NOx}) + \Sigma(S_{NOx} + S_{NH3}).$$

Somit kann auf diesem Wege die für das Abgassystem 1 gemäß Fig. 1 nicht direkt und einzeln ermittelbare NH3-Speicherfähigkeit des NH3-SCR-Katalysators 7 indirekt ermittelt werden. Dies ermöglicht es, das Abgassystem 1 stets so zu betreiben, dass ein NH3-Schlupf des NH3-SCR-Katalysators und eine dadurch am NOx-Speicherkatalysator 8 bewirkte Lachgasbildung zuverlässig vermieden werden können. Daneben ist aus den im Diagnosebetrieb wie oben erläutert ermittelten Speicherkennwerten auch die ebenfalls nicht direkt einzeln ermittelbare NOx-Speicherfähigkeit $S_{NOx}$ des NOx-Speicherkatalysators 8 durch folgende Beziehung ermittelbar:

$$S_{NOx} = \Sigma(OSC_{NSC} + S_{NOx}) - OSC_{NSC}.$$

Der NH3-SCR-Katalysator 7 und der NOx-Speicherkatalysator können daher laufend bzw. in gewissen Abständen in Bezug auf ihre Speicherfähigkeit bezüglich $NH_3$ bzw. $NO_x$ überwacht und diagnostiziert werden. Außerdem können, wie oben erläutert die Sauerstoffspeicherfähigkeit sowohl des NH3-Bildungskatalysators 5, als auch die des NOx-Speicherkatalysators 8 laufend bzw. in gewissen Abständen ermittelt und diese Katalysatoren daher ebenfalls diesbezüglich überwacht bzw. diagnostiziert werden. Somit sind insgesamt eine umfassende Überwachung und Diagnose der Katalysatoren 5, 7, 8 des Abgasreinigungssystems 1 und damit ein an eine alterungsbedingte Verschlechterung der Speicherkennwerte dieser Katalysatoren angepasster Betrieb des Abgasreinigungssystems 1 ermöglicht.

**Patentansprüche**

1. Verfahren zum Betreiben eines Abgasreinigungssystems (1) zum Reinigen eines Abgases einer Brennkraftmaschine, die in einem Magerbetriebsmodus mit Luftüberschuss und in einem Fettbetriebsmodus mit Luftmangel betrieben werden kann, wobei das Abgasreinigungssystem (1) in einer Strömungsrichtung des Abgases hintereinander angeordnet

   - einen Ammoniak-Bildungskatalysator (5), der unter reduzierenden Bedingungen eine wenigstens teilweise Reduktion von im Abgas enthaltenen Stickoxid zu Ammoniak katalysieren kann,
   - einen ersten Abgassensor (S1),
   - einen Ammoniak-SCR-Katalysator (7) mit einer Speicherfähigkeit für Ammoniak,
   - einen dem Ammoniak-SCR-Katalysator (7) unmittelbar nachgeschalteten Stickoxid-Speicherkatalysator (8) mit einer Speicherfähigkeit für Sauerstoff und einer Speicherfähigkeit für Stickoxide, und
   - einen zweiten Abgassensor (S2)

   aufweist, wobei als erster und zweiter Abgassensor (S1, S2) Abgassensoren eingesetzt werden, welche jeweils ein mit einem Stickoxid-Gehalt des Abgases korrelierendes erstes Signal ($S_{si}$, $S_{S2}$) und ein mit einem Lambda-Wert des Abgases korrelierendes zweites Signal ($\lambda_{S1}$, $\lambda_{S2}$) abgeben können und in einem Diagnosebetrieb in sich unmittelbar aneinander anschließenden Betriebsphasen der Brennkraftmaschine mit Magerbetriebsmodus und mit Fettbetriebsmodus durch Auswertung der Signale des ersten und des zweiten Abgassensors (S1, S2) die Ammoniak-Speicherfähigkeit des Ammoniak-SCR-Katalysators (7), die Sauerstoff-Speicherfähigkeit des Stickoxid-Speicherkatalysators (8) und optional die Stickoxid-Speicherfähigkeit des Stickoxid-Speicherkatalysators (8) ermittelt werden und im Diagnosebetrieb ein erster Speicherfähigkeitssummenwert für die Sauerstoff-Speicherfähigkeit und die Stickoxid-Speicherfähigkeit des Stickoxid-Speicherkatalysators (8) und ein zweiter Speicherfähigkeitssummenwert für die Stickoxid-Speicherfähigkeit des Stickoxid-Speicherkatalysators (8) und die Ammoniak-Speicherfähigkeit des NH3-SCR-Katalysators (7) ermittelt werden und durch Verrechnung der ermittelten Sauerstoff-Speicherfähigkeit und des ersten und des zweiten Speicherfähigkeitssummenwerts die NH3-Speicherfähigkeit des Ammoniak-SCR-Katalysators (7) ermittelt wird.

2. Verfahren nach Anspruch 1,
   **dadurch gekennzeichnet, dass**
   im Diagnosebetrieb ein erster Speicherfähigkeitssummenwert für die Sauerstoff-Speicherfähigkeit und die Stickoxid-Speicherfähigkeit des Stickoxid-Speicherkatalysators (8) ermittelt wird und durch Verrechnung der ermittelten Sauerstoff-Speicherfähigkeit mit dem ersten Speicherfähigkeitssummenwert die Stickoxid-Speicherfähigkeit des Stickoxid-Speicherkatalysators (8) ermittelt wird.

3. Verfahren nach einem der Ansprüche 1 oder 2,
   **dadurch gekennzeichnet, dass**
   im Diagnosebetrieb die Brennkraftmaschine in einem ersten Verfahrensschritt solange im Fettbetriebsmodus betrieben wird, bis die Ammoniak-Speicherfähigkeit des Ammoniak-SCR-Katalysators (7) durch Aufnahme von im Fettbetriebsmodus am Ammoniak-Bildungskatalysator (5) gebildetem und mit dem Abgas in den Ammoniak-SCR-Katalysator (7) eingetragenem Ammoniak zumindest weitestgehend ausgeschöpft ist und der Stickoxid-Speicherkatalysator (8) zumindest weitestgehend von eingespeichertem Stickoxid und Sauerstoff befreit ist und in einem direkt anschließenden zweiten Verfahrensschritt ein Wechsel des Brennkraftmaschinenbetriebs in den Magerbetriebsmodus vorgenommen wird, und aus einem Zeitverzug zwischen dem einen Wechsel von fett nach mager anzeigenden zweiten Signal ($\lambda_{S1}$) des ersten Abgassensors (S1) und dem einen Wechsel von fett nach mager anzeigenden zweiten Signal ($\lambda_{S2}$) des zweiten Abgassensors (S2) die Sauerstoff-Speicherfähigkeit des Stickoxid-Speicherkatalysators (8) ermittelt wird.

4. Verfahren nach einem der Ansprüche 1 bis 3,
   **dadurch gekennzeichnet, dass**
   im Diagnosebetrieb die Brennkraftmaschine in einem ersten Verfahrensschritt solange im Fettbetriebsmodus betrieben wird, bis die Ammoniak-Speicherfähigkeit des Ammoniak-SCR-Katalysators (7) durch Aufnahme von im Fettbetriebsmodus am Ammoniak-Bildungskatalysator (5) gebildetem und mit dem Abgas in den Ammoniak-SCR-Katalysator (7) eingetragenem Ammoniak zumindest weitestgehend ausgeschöpft ist und der Stickoxid-Speicherkatalysator (8) zumindest weitestgehend von eingespeichertem Stickoxid und Sauerstoff befreit ist und in einem direkt anschließenden zweiten Verfahrensschritt ein Wechsel des Brennkraftmaschinenbetriebs in den Magerbetriebsmodus vorgenommen wird, und in einem dritten Verfahrensschritt die Brennkraftmaschine solange im Magerbetriebsmodus betrieben wird, bis die Stickoxid-Speicherfähigkeit des Stickoxid-Speicherkatalysators (8) durch Einspeicherung von mit dem Abgas in den Stickoxid-Speicherkatatysator (8) eingetragenem Stickoxid zumindest weitestgehend ausgeschöpft ist und aus den über die Zeitdauer des dritten Verfahrensschritts integrierten ersten Signalen ($S_{S1}$, $S_{S2}$) des ersten und des zweiten Abgassensors (S1, S2) der zweite Speicherfähigkeitssummenwert ermittelt wird.

5. Verfahren nach einem der Ansprüche 1 bis 4,
   **dadurch gekennzeichnet, dass**
   im Diagnosebetrieb ausgehend von einem Magerbetrieb der Brennkraftmaschine mit zumindest annähernd ausgeschöpfter Stickoxid-Speicherfähigkeit des Stickoxid-Speicherkatalysators (8) ein Wechsel des Brennkraftmaschinenbetriebs in den Fettbetriebsmodus vorgenommen wird und der Fettbetriebsmodus solange aufrechterhalten wird, bis das zweite Signal ($\lambda_{S2}$) des zweiten Abgassensors (S2) einen Wechsel von mager nach fett anzeigt und wenigstens aus einem Zeitverzug zwischen dem einen Wechsel von mager nach fett anzeigenden zweiten Signal ($\lambda_{S1}$) des ersten Abgassensors (S1) und dem einen Wechsel von mager nach fett anzeigenden zweiten Signal ($\lambda_{S2}$) des zweiten Abgassensors (S2) der erste Speicherfähigkeitssummenwert ermittelt wird.

6. Verfahren nach Anspruch 5,
   **dadurch gekennzeichnet, dass**
   zur Ermittlung des ersten Speicherfähigkeitssummenwerts zusätzlich eine in Verbindung mit dem Wechsel des Brennkraftmaschinenbetriebs vom Magerbetriebsmodus in den Fettbetriebsmodus erfolgende Freisetzung von unreduziert aus dem Stickoxid-Speicherkatalysator (8) desorbierendem Stickoxid durch summarische Erfassung des ersten Signals des zweiten Abgassensors (S2) berücksichtigt wird.

7. Verfahren nach einem der Ansprüche 1 bis 6,
   **dadurch gekennzeichnet, dass**
   die Brennkraftmaschine außerhalb des Diagnosebetriebs in einem Wechsel von sich abwechselnden Betriebsphasen im Magerbetriebsmodus und Fettbetriebsmodus betrieben wird, wobei eine jeweilige Betriebsphase im Fettbetriebsmodus spätestens dann beendet wird, wenn die im Ammoniak-SCR-Katalysator (7) gespeicherte Ammoniak-Menge einen vorgebbaren Schwellenwert erreicht hat, der kleiner als die Ammoniak-Speicherfähigkeit des Ammoniak-SCR-Katalysators (7) ist.

## Claims

1. Method for operating an exhaust gas purification system (1) for purifying an exhaust gas of an internal combustion engine capable of operating in a lean mode with excess air and in a rich mode with oxygen deficiency, wherein the exhaust gas purification system (1) comprises - arranged one behind the other in a direction of exhaust gas flow

   - an ammonia-forming catalytic converter (5), which can catalyse an at least partial reduction of nitrogen oxide contained in the exhaust gas to ammonia under reducing conditions,
   - a first exhaust gas sensor (S1),
   - an ammonia SCR converter (7) with an ammonia storage capacity,
   - a nitrogen oxide storage converter (8) placed immediately downstream of the ammonia SCR converter (7) and having a storage capacity for oxygen and a storage capacity for nitrogen oxides, and
   - a second exhaust gas sensor (S2),

   wherein, as first and second exhaust gas sensors (S1, S2), there are provided exhaust gas sensors each of which is capable of outputting a first signal ($S_{S1}$, $S_{S2}$) correlating with a nitrogen oxide content of the exhaust gas and a second signal ($\lambda_{S1}$, $\lambda_{S2}$) correlating with a lambda value of the exhaust gas and wherein, in a diagnostic mode in immediately consecutive operating phases of the internal combustion engine with lean mode and with rich mode, the ammonia storage capacity of the ammonia SCR converter (7), the oxygen storage capacity of the nitrogen oxide storage converter (8) and optionally the nitrogen oxide storage capacity of the nitrogen oxide storage converter (8) are determined by evaluating the signals of the first and second exhaust gas sensors (S1, S2), and wherein, in the diagnostic mode, a first storage capacity sum value for the oxygen storage capacity and the nitrogen oxide storage capacity of the nitrogen oxide storage converter (8) and a second storage capacity sum value for the nitrogen oxide storage capacity of the nitrogen oxide storage converter (8) and the ammonia storage capacity of the NH3 SCR converter (7) are determined and the NH3 storage capacity of the ammonia SCR converter (7) is determined by reckoning up the detected oxygen storage capacity and the first and second storage capacity sum values.

**2.** Method according to claim 1,
**characterised in that**
in the diagnostic mode, a first storage capacity sum value for the oxygen storage capacity and the nitrogen oxide storage capacity of the nitrogen oxide storage converter (8) is determined and the nitrogen oxide storage capacity of the nitrogen oxide storage converter (8) is determined by reckoning up the detected oxygen storage capacity with the first storage capacity sum value.

**3.** Method according to claim 1 or 2,
**characterised in that**
in the diagnostic mode, the internal combustion engine is, in a first step of the method, operated in the rich mode until the ammonia storage capacity of the ammonia SCR converter (7) is at least to the greatest extent exhausted by taking up ammonia formed at the ammonia-forming catalytic converter (5) and introduced into the ammonia SCR converter (7) with the exhaust gas and the nitrogen oxide storage converter (8) is at least to the greatest extent freed of stored nitrogen oxide and oxygen, and **in that**, in an immediately following second step of the method, the operation of the internal combustion engine is switched to the lean mode, and **in that** the oxygen storage capacity of the nitrogen oxide storage converter (8) is determined from a time delay between the second signal ($\lambda_{S1}$) of the first exhaust gas sensor (S1), which indicates a change from rich to lean, and the second signal ($\lambda_{S2}$) of the second exhaust gas sensor (S2), which indicates a change from rich to lean.

**4.** Method according to any of claims 1 to 3,
**characterised in that**
in the diagnostic mode, the internal combustion engine is, in a first step of the method, operated in the rich mode until the ammonia storage capacity of the ammonia SCR converter (7) is at least to the greatest extent exhausted by taking up ammonia formed at the ammonia-forming catalytic converter (5) and introduced into the ammonia SCR converter (7) with the exhaust gas and the nitrogen oxide storage converter (8) is at least to the greatest extent freed of stored nitrogen oxide and oxygen, and **in that**, in an immediately following second step of the method, the operation of the internal combustion engine is switched to the lean mode, and **in that**, in a third step of the method, the internal combustion engine is operated in the lean mode until the nitrogen oxide storage capacity of the nitrogen oxide storage converter (8) is at least to the greatest extent exhausted by storing nitrogen oxide introduced into the nitrogen oxide storage converter (8) with the exhaust gas, and **in that** the second storage capacity sum value is determined from the first signals ($S_{S1}$, $S_{S2}$) of the first and second exhaust gas sensors (S1, S2), which are integrated over the duration of the third step of the method.

**5.** Method according to any of claims 1 to 4,
**characterised in that**
in the diagnostic mode, starting from a lean mode of the internal combustion engine with at least almost exhausted nitrogen oxide storage capacity of the nitrogen oxide storage converter (8), the operation of the internal combustion engine is switched to the rich mode and the rich mode is maintained until the second signal ($\lambda_{S2}$) of the second exhaust gas sensor (S2) indicates a change from lean to rich and the first storage capacity sum value is determined at least from a time delay between the second signal ($\lambda_{S1}$) of the first exhaust gas sensor (S1), which indicates a change from lean to rich, and the second signal ($\lambda_{S2}$) of the second exhaust gas sensor (S2), which indicates a change from lean to rich.

**6.** Method according to claim 5,
**characterised in that**
in the determination of the first storage capacity sum value, a release of unreduced nitrogen oxide desorbing from the nitrogen oxide storage converter (8), which is involved in switching the operation of the internal combustion engine from the lean mode to the rich mode, is additionally taken into account by summary detection of the first signal of the second exhaust gas sensor (S2).

**7.** Method according to any of claims 1 to 6,
**characterised in that**
outside the diagnostic mode, the internal combustion engine is operated in alternating phases in the lean mode and in the rich mode, wherein a respective operating phase in the rich mode is terminated at the latest when the ammonia quantity stored by the ammonia SCR converter (7) has reached a presettable threshold value which is lower than the ammonia storage capacity of the ammonia SCR converter (7).

## Revendications

1. Procédé de fonctionnement d'un système (1) de purification de gaz d'échappement destiné à purifier un gaz d'échappement provenant d'un moteur à combustion interne, qui peut fonctionner dans un mode de mélange pauvre au moyen d'excès d'air et dans un mode de mélange riche au moyen d'un manque d'air, le système (1) de purification de gaz d'échappement présentant dans un sens d'écoulement du gaz d'échappement, disposés les uns derrière les autres

   - un catalyseur (5) de formation d'ammoniac qui peut catalyser dans des conditions de réduction une réduction au moins partielle d'oxyde d'azote contenu dans le gaz d'échappement en ammoniac,
   - un premier capteur (S1) de gaz d'échappement,
   - un catalyseur RCS d'ammoniac (7) ayant une capacité de stockage pour l'ammoniac,
   - un catalyseur (8) à accumulation d'oxyde d'azote ayant une capacité de stockage pour l'oxygène et une capacité de stockage pour l'oxyde d'azote, raccordé directement en aval du catalyseur RCS d'ammoniac (7), et
   - un second capteur (S2) de gaz d'échappement,

   des capteurs de gaz d'échappement étant utilisés en tant que premier et second capteur de gaz d'échappement (S1, S2) qui respectivement peuvent émettre un premier signal ($S_{s1}$, $S_{S2}$) corrélé à une teneur en oxyde d'azote du gaz d'échappement et un second signal ($\lambda_{S1}$, $\lambda_{S2}$) corrélé à une valeur lambda du gaz d'échappement et dans un mode de diagnostic dans des phase de fonctionnement directement successives du moteur à combustion interne dans un mode de mélange pauvre et dans un mode de mélange riche par l'évaluation des signaux du premier et du second capteur de gaz d'échappement (S1, S2) la capacité de stockage de l'ammoniac du catalyseur SCR d'ammoniac (7), la capacité de stockage d'oxygène du catalyseur (8) à accumulation d'oxyde d'azote et éventuellement la capacité de stockage d'oxyde d'azote du catalyseur à accumulation d'oxyde d'azote (8) peuvent être déterminées et dans le mode de diagnostic un premier volume de capacité de stockage pour la capacité de stockage d'oxygène et la capacité de stockage d'oxyde d'azote du catalyseur à accumulation d'oxyde d'azote (8) et un second volume de capacité de stockage pour la capacité de stockage d'oxyde d'azote du catalyseur à accumulation d'oxyde d'azote (8) et la capacité de stockage d'ammoniac du catalyseur SCR de NH3 (7) sont déterminés et par compensation de la capacité de stockage d'oxygène déterminée et le premier et le second volume de capacité de stockage, est déterminée la capacité de stockage NH3 du catalyseur SCR d'ammoniac (7).

2. Procédé selon la revendication 1, **caractérisé en ce que** dans le mode de diagnostic, une première valeur de capacité de stockage est déterminée pour la capacité de stockage d'oxygène et la capacité de stockage d'oxyde d'azote du catalyseur à accumulation d'oxyde d'azote (8) et par compensation de la capacité de stockage d'oxygène déterminée à l'aide du premier volume de capacité de stockage est déterminée la capacité de stockage d'oxyde d'azote du catalyseur à accumulation d'oxyde d'azote (8).

3. Procédé selon l'une quelconque des revendications 1 ou 2, **caractérisé en ce que** dans le mode de diagnostic le moteur à combustion interne fonctionne dans une première étape du procédé tant qu'il est dans le mode de mélange pauvre, jusqu'à ce que la capacité de stockage d'ammoniac du catalyseur RCS d'ammoniac (7) soit épuisée au moins autant que possible par la réception de l'ammoniac enregistrée dans le catalyseur RCS d'ammoniac à l'aide des gaz d'échappement et dans le mode de mélange pauvre celui formé dans le catalyseur de formation d'ammoniac (5) et le catalyseur à accumulation d'oxyde d'azote (8) est libéré au moins autant que possible de l'oxyde d'azote et de l'oxygène stockés et dans une seconde étape du procédé directement successive est effectué un changement du fonctionnement du moteur à combustion interne en un mode de mélange pauvre, et à partir d'un retard temporel entre le second signal ($\lambda_{S1}$) affichant un changement de riche à pauvre du premier capteur de gaz d'échappement (S1) et le second signal ($\lambda_{S2}$) affichant un changement de riche à pauvre du second capteur de gaz d'échappement (S2) est déterminée la capacité de stockage d'oxygène du catalyseur de stockage d'oxyde d'azote (8).

4. Procédé selon l'une quelconque des revendications 1 à 3, **caractérisé en ce que** dans le mode de diagnostic le moteur à combustion interne fonctionne dans une première étape du procédé tant qu'il est dans le mode de mélange pauvre, jusqu'à ce que la capacité de stockage d'ammoniac du catalyseur RCS d'ammoniac (7) soit épuisée au moins autant que possible par la réception de l'ammoniac enregistrée dans le catalyseur RCS d'ammoniac à l'aide des gaz d'échappement et dans le mode de mélange pauvre celui formé dans le catalyseur de formation d'ammoniac (5) et le catalyseur à accumulation d'oxyde d'azote (8) au moins autant que possible est libéré de l'oxyde d'azote et l'oxygène stockés et dans une deuxième étape de procédé directement successive est effectué un changement du fonctionnement du moteur à combustion interne dans un mode de mélange pauvre, et dans une troisième étape du procédé le moteur à combustion interne fonctionne dans le mode de mélange pauvre tant que la capacité de stockage d'oxyde d'azote du catalyseur à accumulation d'oxyde d'azote (8) est épuisée au moins autant que possible par le stockage de l'oxyde d'azote enregistré à l'aide du gaz d'échappement dans le catalyseur à accumulation d'oxyde d'azote (8) et à partir des premiers signaux ($S_{S1}$, $S_{S2}$) intégrés par la durée de la troisième étape du procédé du premier et du second capteur de gaz d'échappement (S1, S2) est déterminée le second volume de capacité de stockage.

5. Procédé selon l'une quelconque des revendications 1 à 4, **caractérisé en ce que** dans le mode de diagnostic à partir du mélange pauvre du moteur à combustion interne au moyen d'au moins approximativement de la capacité de stockage d'oxyde d'azote épuisée du catalyseur à accumulation d'oxyde d'azote (8) est effectué un changement du fonctionnement du moteur à combustion interne en un mode de mélange pauvre et le mode de mélange pauvre est maintenu tant que le second signal ($\lambda_{S2}$) du second capteur de gaz d'échappement (S2) affiche un changement de pauvre à riche et au moins à partir d'un retard temporel entre le second signal ($\lambda_{S1}$) affichant un changement de pauvre à riche du premier capteur de gaz d'échappement (S1) et le second signal ($\lambda_{S2}$) affichant un changement de pauvre à riche du second capteur de gaz d'échappement (S2) du premier volume de capacité de stockage.

6. Procédé selon la revendication 5, **caractérisé en ce que** pour déterminer le premier volume de capacité de stockage également il est pris en compte une libération s'effectuant en relation avec le changement du mode de fonctionnement du moteur à combustion interne de mélange pauvre à mélange riche de l'oxyde d'azote désorbant de manière non réduite à partir du catalyseur à accumulation d'oxyde d'azote (8) par détection sommaire du premier signal du second capteur de gaz d'échappement (S2).

7. Procédé selon l'une quelconque des revendications 1 à 6, **caractérisé en ce que** le moteur à combustion en dehors du fonctionnement de diagnostic fonctionne dans un changement de phases de fonctionnement alternatives en mode mélange pauvre et en mode mélange riche, chaque phase de fonctionnement se terminant ensuite au plus tard en mode de mélange pauvre, lorsque la quantité d'ammoniac stockée dans le catalyseur RCS d'ammoniac (7) a atteint une valeur seuil prédéfinie qui est inférieure à la capacité de stockage d'ammoniac du catalyseur RCS d'ammoniac (7).

1

S1

S2

TWC

SCR NSK

2

5 4 3 7 8 6

**Fig. 1**

$\lambda$

$\lambda_M$ A1 A2

1,0

$\lambda_{S1}$ $\lambda_{S2}$

t02 t12 t22 t32 Zeit

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0878609 A2
- DE 102009054046 A1
- DE 102007040439 A1
- DE 19816175 A1